# EUROPÄISCHE PATENTANMELDUNG

(11) **EP 1 024 584 A2**
(43) Veröffentlichungstag der Anmeldung: **02.08.2000**
(21) Anmeldenummer: 00100727.7
(22) Anmeldetag: 14.01.2000
(51) Int. Cl.: H02K 5/128, H02K 5/167

(54) **Spalttopf für Kreiselpumpe**

(30) Priorität: 27.01.1999 DE 19903078
(71) Anmelder: WILO GmbH, D-44263 Dortmund (DE)
(72) Erfinder: Materne, Thomas, 59348 L-dinghausen (DE)
(74) Vertreter: COHAUSZ HANNIG DAWIDOWICZ & PARTNER

(57) **Zusammenfassung**

Die Erfindung betrifft einen Spalttopf 1 einer Spalttopf-Kreiselpumpe, der zumindest überwiegend aus Kunststoff besteht und in dem zwei Lager zur Lagerung der Motorwelle angeordnet sind, wobei zumindest das am Boden 2 des Spalttopfes 1 angeordnete Lager 4 axial, radial und drehfest formschlüssig in dem Spalttopf 1 gehalten ist. Die Erfindung betrifft ferner eine Vorrichtung sowie ein Verfahren zum Herstellen eines derartigen Spalttopfes 1 durch Kunststoffspritzen.

## Beschreibung

Die Erfindung betrifft einen Spalttopf einer Spalttopf-Kreiselpumpe, der zumindest überwiegend aus Kunststoff besteht und in dem zwei Lager zur Lagerung der Motorwelle angeordnet sind. Die Erfindung betrifft ferner eine Vorrichtung sowie ein Verfahren zum Herstellen eines derartigen Spalttopfes durch Kunststoffspritzen.

Spalttopf-Kreiselpumpen sind allgemein bekannt. Bei diesen bekannten Pumpen nach dem Naßläuferprinzip besteht der den Naß- vom Trockenraum trennende Spalttopf häufig aus Metall. In dem Spalttopf befindet sich die komplette durch zwei Kugel- oder Gleitlager gelagerte Rotorbaugruppe.

Es ist jedoch auch bekannt, den Spalttopf aus Kunststoff zu fertigen, um so bei geringerem Gewicht und günstigeren Herstellungskosten eine höhere Motorleistung zu erreichen.

Bei den aus Metall bestehenden Spalttöpfen ist ein Lagersitz am Boden des Spalttopfes in Form einer Metallbuchse oder durch eine definierte Formgebung des Spalttopfes integriert. In den Lagersitz ist ein Radiallager eingepreßt. Es ist mit der Außenkontur, also mit der Metallbuchse oder unmittelbar mit dem Spalttopf kraftschlüssig verbunden.

Bei den aus Kunststoff bestehenden Spalttöpfen treten dabei jedoch verschiedenen Probleme auf. Durch Relaxation des Kunststoffes wird im Verlauf des Betriebes die erforderliche Preßpassung zwischen Lager und Lagersitz entspannt. Auch beim Einsatz bei hohen Temperaturen kann sich die Preßpassung aufgrund der unterschiedlichen Ausdehnungskoeffizieten des Lagers und des Spalttopfes entspannen. Beides führt zum Lösen der Preßverbindung und somit zum Mitdrehen und/oder zu einer axialen Verschiebung der Radiallager im Lagersitz.

Auch beim Einsatz in niedrigen Temperaturen treten Nachteile bei einem Kunststoffspalttopf auf. Die unterschiedlichen Ausdehnungskoeffizieten des Lagers und des Spalttopfes führen zu einer Erhöhung der Pressung in der Preßpassung, was schließlich zum Bruch des aus Kunststoff bestehenden Lagersitzes führen kann.

Aufgabe der Erfindung ist es daher, einen konstruktiv einfachen, preiswert herzustellenden und leicht handhabbaren Spalttopf der eingangs genannten Art zu schaffen, der bei einfacher Montierbarkeit einen dauerhaft sicheren Halt der Lager gewährleistet. Ferner soll ein Verfahren und eine Vorrichtung zur einfachen und kostengünstigen Herstellung eines derartigen Spalttopfes bereitgestellt werden.

Diese Aufgabe wird erfindungsgemäß durch einen Spalttopf nach Anspruch 1 gelöst. Wesentlich ist dabei, daß zumindest das am Boden des Spalttopfes angeordnete Lager axial, radial und drehfest formschlüssig in dem Spalttopf gehalten ist. Das Lager sitzt dabei nicht in einer Preßpassung, sondern in einer Übergangs- oder leichten Spielpassung.

Hierdurch wird bei einfacher Konstruktion ein Spalttopf aus Kunststoff geschaffen, der dauerhaft auch beim Einsatz in schwankenden Temperaturen eine sichere Verbindung zwischen Lager und Spalttopf ermöglicht. Bei einer Übergangs- oder leichten Spielpassung zwischen Lager und Kunststoffspalttopf führen die unterschiedlichen Ausdehnungskoeffizienten nicht zu den oben genannten Problemen. Die Handhabung ist einfach und der Spalttopf ist kostengünstig herzustellen.

Besonders vorteilhaft ist es, wenn das von der Pumpe entfernte Radiallager formschlüssig am Boden des Spalttopfes einrastbar ist. Auf diese Weise ist eine besonders einfache und schnelle Montierbarkeit des Lagers gewährleistet.

Dabei kann die Rastverbindung besonders einfach durch mindestens einen, vorzugsweise vier am Boden des Spalttopfes sich axial in Richtung der Pumpe erstreckende und in radialer Richtung elastisch federnde Rastarme ausgeführt sein, die jeweils einen radial nach innen ragenden Vorsprung aufweisen, hinter dem das Radiallager formschlüssig einrastbar ist.

Die Rastarme können auf besonders einfache Weise bei der Montage des Lagers nach außen gedrückt werden, wenn an den der Pumpe zugewandten Seiten der Vorsprünge und/oder an der dem Boden des Spalttopfes zugewandten Seite des Lagers eine Einlaufschrägen ausgebildet sind.

Eine definierte axiale Positionierung des Lagers kann dadurch erreicht werden, daß an dem Boden des Spalttopfes ein Absatz ausgebildet ist, an dem die der Pumpe abgewandte Stirnseite des Radiallagers im eingerasteten Zustand anliegt.

Eine definierte radiale Positionierung des Lagers wird erreicht, wenn an dem Boden des Spalttopfes sich axial in Richtung der Pumpe erstreckende, starre Zentrierungselemente zum radialen Zentrieren des Radiallagers angeordnet sind.

Ein Verdrehen des Lagers kann besonders einfach dadurch erreicht werden, daß die Vorsprünge der Rastarme formschlüssig in jeweils eine in das Radiallager eingeformte Ausnehmung eingreifen.

Vorteilhaft ist es, wenn die Rastarme und/oder die Zentrierungselemente mit dem Spalttopf einstückig ausgebildet, insbesondere an den Boden des Spalttopfes angegossen bzw. angespritzt sind. Auf diese Weise entfallen andernfalls durch das Einbringen dieser Elemente erforderliche zusätzliche Montageschritte.

Eine besonders vorteilhafte Vorrichtung zum Herstellen eines erfindungsgemäßen Spalttopfes durch Kunststoffspritzen weist zum Ausformen der Innenkontur des Spalttopfes zwei koaxial ineinander angeordnete Kerne auf, die relativ zueinander in eine Entformungsposition axial verschiebbar sind, und die in dieser Entformungsposition relativ zueinander verdrehbar sind. Durch ein derartiges Werkzeug wird eine Gußform geschaffen, die auf besonders einfache und somit preiswerte Weise die Herstellung des Spalttopfes mit den Hinterschnitten an den Vorsprüngen der Rastarme ermöglicht. Dabei sind die Kerne vorteilhafterweise zumindest über eine Strecke relativ zueinander axial verschiebbar, die der Länge der Rastarme bzw. der Zentrierungselemente entspricht.

Besonders vorteilhaft ist es, wenn der äußere Kern die radialen Seitenflächen, die freien Stirnseiten sowie die radial äußeren Mantelflächen der Rastarme und Zentrierungselemente begrenzt, während der innere Kern die radial inneren Mantelflächen der Rastarme und Zentrierungselemente sowie die dem Boden des Spalttopfes zugewandten Unterseiten der Vorsprünge der Rastarme (Hinterschnitt) begrenzt.

Mit einer derartigen Gießform kann der erfindungsgemäße Spalttopf besonders einfach und somit kostengünstig hergestellt werden. Dabei wird beim Entformen des Spalttopfes zunächst der äußere Kern zumindest um eine der Länge der Rastarme bzw. Zentrierungselemente entsprechende Strecke axial gezogen, wodurch die in Umfangsrichtung neben den Rastarmen vorhandenen Freiräume freigegeben werden. Danach wird der innere Kern um einen Winkel gedreht, der der Breite der Vorsprünge in Umfangsrichtung entspricht, wodurch die zuvor unter den Vorsprüngen der Rastarme befindlichen Bereiche des inneren Kerns in die Freiräume neben den Rastarmen gebracht werden. Dann werden der innere und gegebenenfalls der äußere Kern, falls er nicht schon vollständig entfernt wurde, axial aus dem Spalttopf gezogen. Abschließend wird der Spalttopf aus der die Außenkontur formenden Form entnommen.

Weitere Vorteile und Merkmale der Erfindung ergeben sich aus den Unteransprüchen sowie aus der nachfolgenden Beschreibung und den in den Zeichnungen dargestellten Ausführungsbeispielen.

### Es zeigen:

- Figur 1:: Schnittansicht eines Spalttopfes entlang des Schnittes A-A in Figur 2
- Figur 2:: Stirnansicht des Spalttopfes aus Figur 1
- Figur 3:: Schnittansicht des Spalttopfes entlang des Schnittes B-B in Figur 1
- Figur 4:: Schnittansicht eines Spalttpfes mit Kernen einer erfindungsgemäßen Gießform zur Herstellung des Spalttopfes entlang des Schnittes C-C in Figur 5
- Figur 5:: Schnittansicht des Spalttopfes und der Kerne entlang des Schnittes D-D in Figur 4
- Figur 6:: Schnittansicht des Spalttopfes und der Kerne entlang des Schnittes E-E in Figur 4

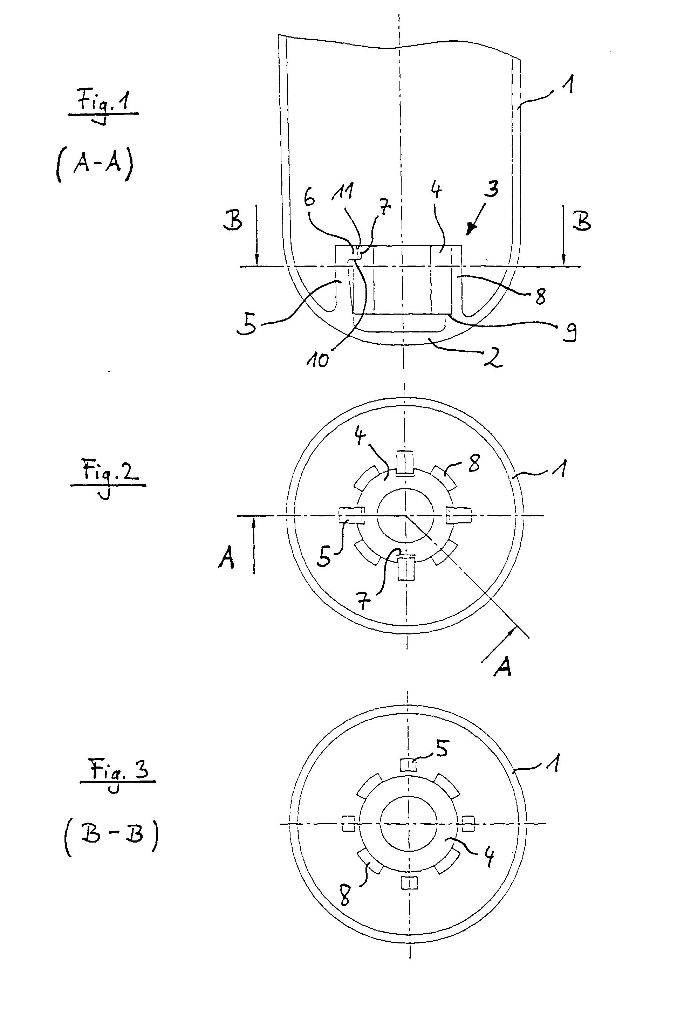

Der in den Figuren 1 bis 3 dargestellte untere Bereich eines erfindungsgemäß aus Kunststoff bestehenden Spalttopfs 1 einer Spalttopf-Kreiselpumpe ist im Bereich seines Bodens 2 kugelförmig ausgebildet, was eine materialsparende und somit kostengünstige sowie besonders spritzgießgerechte Form darstellt. Im Inneren des Spalttopfs 1 ist an seinem Boden 2 ein Lagersitz 3 zur Aufnahme eines Radialgleitlagers 4 ausgebildet.

Der Lagersitz 3 hat vier Rastarme 5, die sich axial in Richtung der nicht dargestellten Pumpe verjüngend erstrecken. Die Rastarme 5 sind einstückig an den Boden 2 angespritzt und können elastisch nach außen federn. An ihren freien Enden weisen sie jeweils einen radial nach innen ragenden Vorsprung 6 auf.

Jeder Vorsprung 6 greift in jeweils eine in der Außenseite des Lagers 4 eingeformte Ausnehmung 7 ein. Die Ausnehmungen 7 können bei der Herstellung des Lagers 4 durch Sintern kostengünstig ohne zusätzlichen Fertigungsschritt eingeformt werden, da sie keinen Hinterschnitt am Lager 4 verursachen. Die Breite der Ausnehmungen 7 entspricht der Breite der Vorsprünge 6, so daß das Lager 4 formschlüssig gegen Verdrehen gesichert ist.

Zusätzlich zu den elastisch federnden Rastarmen 5 weist der Lagersitz 3 vier starre Zentrierungselemente 8 auf, die an der Außenseite des Lagers 4 anliegen. Das Lager 4 ist dadurch radial formschlüssig gehalten und zentriert. In Umfangsrichtung folgen abwechselnd Rastarme 5 und Zentrierungselemente 8 hintereinander.

Die Zentrierungselemente 8 sind ebenfalls einstückig an den Boden 2 angespritzt. Am Übergang der Zentrierungselemente 8 zum Boden 2 ist ein Absatz 9 in die Zentrierungselemente 8 eingeformt, an dem das Lager 4 axial anliegt. In Richtung der Pumpe ist das Lager 4 durch die am Boden der Ausnehmungen 7 anliegenden Unterseiten 10 der Vorsprünge 6 gehalten. Somit ist das Lager 4 axial formschlüssig in einer definierten Position fixiert.

An der Innenseite der Vorsprünge 6 sind Einlaufschrägen 11 eingeformt, die bei der Montage des Lagers 4 durch axiales Eindrücken auf einfache Weise das Federn der Rastarme 5 nach außen bewirken. Sobald das Lager 4 in der durch den Absatz 9 vorgegebenen Position sich befindet federn die elastischen Rastarme 5 zurück nach innen und verriegeln dadurch das Lager 4 axial und drehfest.

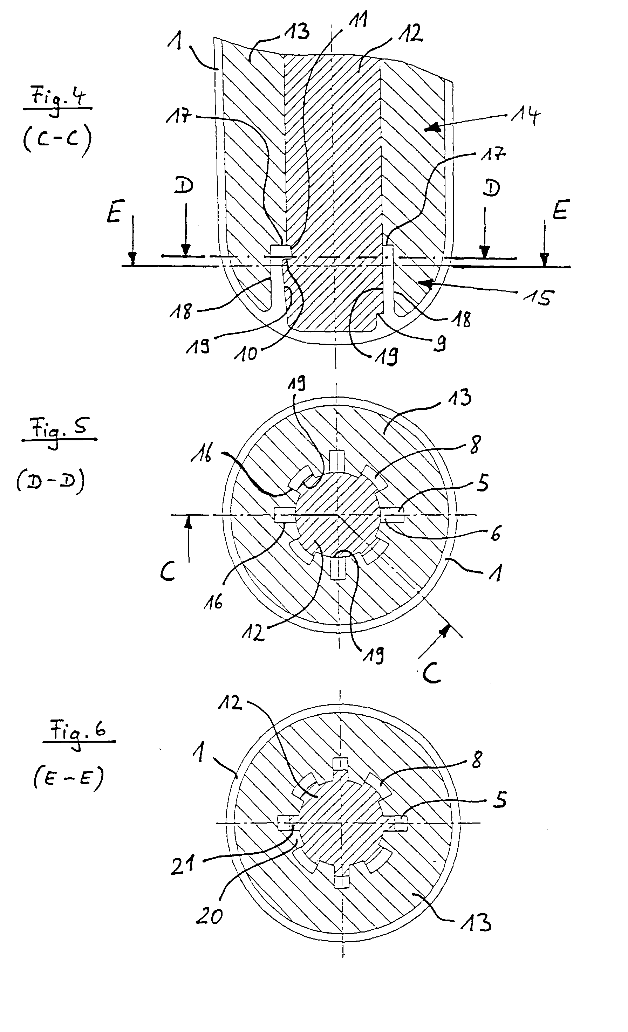

In den Figuren 4 bis 6 ist der erfindungsgemäße Spalttopf 1 zusammen mit den erfindungsgemäßen Kernen 12 und 13 des Spritzgießwerkzeugs gezeigt. Die äußere Form des Werkzeugs ist dabei nicht dargestellt. Im oberhalb der Rastarme 5 bzw. der Zentrierungselemente 8 befindlichen Bereich 14 ist der innere Kern 12 als Zylinder und der äußere Kern 13 als Hohlzylinder ausgebildet. Beide Kerne 12, 13 sind koaxial zueinander und zum Spalttopf 1 angeordnet.

Im unteren Bereich 15 begrenzt der äußere Kern 13 die radialen Seitenflächen 16, die freien Stirnseiten 17 sowie die radial äußeren Mantelflächen 18 der Rastarme 5 und Zentrierungselemente 8. Der innere Kern 12 begrenzt in dem unteren Bereich 15 die radial inneren Mantelflächen 19 der Rastarme 5 und Zentrierungselemente 8, die Unterseiten 10 und Einlaufschrägen 11 der Vorsprünge 6 sowie den Absatz 9.

Zwischen je einem Rastarm 5 und einem Zentrierungselement 8 liegt der äußere Kern 13 am inneren Kern 11 an, wobei sich radial nach innen gerichtete Vorsprünge 20 des äußeren Kerns 13 mit radial nach außen gerichteten Vorsprüngen 21 des inneren Kerns 12 keilwellenförmig abwechseln.

## Patentansprüche

1. Spalttopf einer Spalttopf-Kreiselpumpe, der zumindest überwiegend aus Kunststoff besteht und in dem zwei Lager zur Lagerung der Motorwelle angeordnet sind,
**dadurch gekennzeichnet**,
daß zumindest das am Boden (2) des Spalttopfes (1) angeordnete Lager (4) axial, radial und drehfest formschlüssig in dem Spalttopf (1) gehalten ist.

2. Spalttopf nach Anspruch 1, **dadurch gekennzeichnet**, daß das von der Pumpe entfernte Radiallager (4) formschlüssig am Boden (2) des Spalttopfes (1) einrastbar ist.

3. Spalttopf nach Anspruch 2, **dadurch gekennzeichnet**, daß an dem Boden (2) des Spalttopfes (1) mindestens ein sich axial in Richtung der Pumpe erstreckender und in radialer Richtung elastisch federnder Rastarm (5) angeordnet ist, der einen radial nach innen ragenden Vorsprung (6) aufweist, hinter dem das Radiallager (4) formschlüssig einrastbar ist.

4. Spalttopf nach Anspruch 3, **dadurch gekennzeichnet**, daß an den der Pumpe zugewandten Seiten der Vorsprünge (6) und/oder an der dem Boden (2) des Spalttopfes (1) zugewandten Seite des Lagers (4) eine Einlaufschräge (11) ausgebildet ist.

5. Spalttopf nach einem der Ansprüche 2 bis 4,
**dadurch gekennzeichnet**, daß an dem Boden (2) des Spalttopfes (1) ein Absatz (9) ausgebildet ist, an dem die der Pumpe abgewandte Stirnseite des Radiallagers (4) im eingerasteten Zustand anliegt.

6. Spalttopf nach einem der vorherigen Ansprüche,
**dadurch gekennzeichnet**, daß an dem Boden (2) des Spalttopfes (1) sich axial in Richtung der Pumpe erstreckende, starre Zentrierungselemente (8) zum radialen Zentrieren des Radiallagers (4) angeordnet sind.

7. Spalttopf nach einem der Ansprüche 3 bis 6,
**dadurch gekennzeichnet**, daß der Vorsprung (6) des Rastarms (5) formschlüssig in eine in das Radiallager (4) eingeformte Ausnehmung (7) eingreift.

8. Spalttopf nach einem der Ansprüche 3 bis 7,
**dadurch gekennzeichnet**, daß der Rastarm (5) und/oder die Zentrierungselemente (8) mit dem Spalttopf (1) einstückig ausgebildet, insbesondere an den Boden (2) des Spalttopfes (1) angegossen bzw. angespritzt sind.

9. Vorrichtung zum Herstellen eines Spalttopfes (1) nach einem der vorherigen Ansprüche durch Kunststoffspritzen, **dadurch gekennzeichnet**, daß die Vorrichtung zum Ausformen der Innenkontur des Spalttopfes (1) zwei koaxial ineinander angeordnete Kerne (12, 13) aufweist, die relativ zueinander in eine Entformungsposition axial verschiebbar sind, in der sie relativ zueinander verdrehbar sind.

10. Vorrichtung nach Anspruch 9, **dadurch gekennzeichnet**, daß die Kerne (12, 13) zumindest über eine der Länge der Rastarme (5) bzw. Zentrierungselemente (8) entsprechende Strecke relativ zueinander axial verschiebbar sind.

11. Vorrichtung nach Anspruch 9 oder 10, **dadurch gekennzeichnet**, daß der äußere Kern (13) die radialen Seitenflächen (16), die freien Stirnseiten (17) sowie die radial äußeren Mantelflächen (18) der Rastarme (5) und Zentrierungselemente (8) begrenzt.

12. Vorrichtung nach einem der Anspruch 9 bis 11,
**dadurch gekennzeichnet**, daß der innere Kern (12) die radial inneren Mantelflächen (19) der Rastarme (5) und Zentrierungselemente (8), die dem Boden (2) des Spalttopfes (1) zugewandte Unterseite (10) der Vorsprünge (6) der Rastarme (5) sowie gegebenenfalls die Einlaufschrägen (11) der Vorsprünge (6) und den Absatz (9) begrenzt.

13. Verfahren zum Herstellen eines Spalttopfes (1) nach einem der Ansprüche 1 bis 8 durch Kunststoffspritzen mit einer Vorrichtung nach einem der Ansprüche 9 bis 12,
**dadurch gekennzeichnet**,
daß beim Entformen des Spalttopfes (1) zunächst der äußere Kern (13) zumindest um eine der Länge der Rastarme (5) bzw. Zentrierungselemente (8) entsprechende Strecke axial gezogen wird,
daß danach der innere Kern (12) um einen Winkel gedreht wird, der der Breite der Vorsprünge (6) in Umfangsrichtung entspricht,
und daß anschließend der innere Kern (12) und gegebenenfalls der äußere Kern (13) axial gezogen werden.
